# EUROPEAN PATENT APPLICATION

(11) **EP 4 521 378 A1**
(43) Date of publication of application: **12.03.2025**
(21) Application number: 24198453.3
(22) Date of filing: 04.09.2024
(51) Int. Cl.: G08G 1/0967, B60W 30/18, B60W 60/00, G08G 1/16, H04W 4/40, H04W 4/44, H04W 4/46

(54) **METHOD, DEVICE, AND COMPUTER PROGRAM FOR IMPROVING MANOEUVRE COORDINATION IN AN INTELLIGENT TRANSPORT SYSTEM**

(30) Priority: 07.09.2023 GB 202313679
(71) Applicant: CANON KABUSHIKI KAISHA, Tokyo 146-8501 (JP)
(72) Inventor: MORVAN, Isabelle, 35517 Cesson-Sévigné Cedex (FR); NASSOR, Eric, 35517 Cesson-Sévigné Cedex (FR); RUELLAN, Hervé, 35517 Cesson-Sévigné Cedex (FR); LE HOUEROU, Brice, 35517 Cesson-Sévigné Cedex (FR)
(74) Representative: Casalonga France

(57) **Abstract**

According to some embodiments of the disclosure, it is provided a method, in an Intelligent Transport System, ITS, of improving manoeuvre coordination. After having identified a manoeuvre to be carried out, in a coordinating ITS station, ITS-S, the manoeuvre involving a plurality of entities, at least one of the entities comprising a coordinated ITS-S, at least one traffic rule to be followed by the at least one entity to carry out the manoeuvre is obtained and a Manoeuvre Coordination Message, MCM, is generated and transmitted. The MCM comprises a first description structure for describing the at least one obtained traffic rule and a second description structure for describing an environment wherein the manoeuvre is to be carried out, the second description structure being different from the first description structure.

## Description

### FIELD OF THE DISCLOSURE

The present disclosure relates generally to Intelligent Transport Systems (ITSs) and more specifically to Cooperative Intelligent Transport Systems (C-ITSs).

### BACKGROUND OF THE DISCLOSURE

Cooperative Intelligent Transport Systems (C-ITSs) is an emerging technology for future transportation management that aims at improving road safety, traffic efficiency and driver experience.

Intelligent Transport Systems (ITS), as defined by the European Telecommunications Standards Institute (ETSI), include various types of communication such as:
- communications between vehicles (e.g., car-to-car), and
- communications between vehicles and stationary stations (e.g., car-to-infrastructure).

C-ITSs are not restricted to road transport as such. More generally, C-ITS may be defined as the use of information and communication technologies (ICT) for rail, water, and air transport, including navigation systems. Such various types of C-ITS generally rely on radio services for communication and use dedicated technologies.

Such C-ITSs are subject to standards, specified for each country and/or territory where C-ITSs are implemented. Today, in Europe, the European Telecommunications Standards Institute is in charge of the elaboration of the specifications forming the standards to which C-ITSs are subjected.

Cooperation within C-ITSs is achieved by exchange of messages, referred as to ITS messages, between ITS stations (denoted ITS-Ss). The ITS-Ss may be vehicles, Road Side Units (RSUs), Vulnerable Road Users (VRUs) carrying an ITS equipment (for instance included in a smartphone, a GPS device, a smart watch, or in a cyclist equipment), or any other entities or infrastructure equipped with an ITS equipment, as well as central subsystems (back-end systems and traffic management centres).

As observed above, C-ITSs may support various types of communications, for instance between vehicles (vehicle-to-vehicle or "V2V"), referring to all kinds of road users, e.g., car-to-car, or between vehicles and stationary stations such as vehicle-to-infrastructure or "V2I", and infrastructure-to-vehicle or "12V", e.g., car-to-infrastructure.

Such exchanges of messages may be performed via a wireless network, referred to as "V2X" (for "vehicle" to any kind of devices) networks, examples of which may include 3GPP LTE- Advanced Pro, 3GPP 5G, or IEEE 802.11p technology (3GPP, LTE, and IEEE are Registered Trade Marks).

Exemplary ITS messages include Cooperative Awareness Messages (CAMs), Vulnerable Road Users Awareness Messages (VAMs), and Decentralized Environmental Notification Messages (DENMs). An ITS-S sending an ITS message is referred to as an "originating" ITS-S and an ITS-S receiving an ITS message is referred to as a "receiving" ITS-S. VAMs and CAMs are generally periodically sent with a period varying depending, for example, on the speed of the originating ITS-S.

It is noted that ETSI TS 103 324 (v2.1.1 of June 2023) defines the Collective Perception Service through which an ITS-S having on-board sensor systems detects objects in its vicinity and transmits, using broadcast CPMs, description information (e.g. dynamics such as position and/or kinematic information) thereof. The CPMs are sent periodically with a period from 100 ms to 1 s depending for example on the speed of the objects sensed by the originating ITS-S.

It is recalled here that EN 302 637-2 (V1.4.1 of April 2019) standard defines the Cooperative Awareness Basic Service, that may be used by an ITS-S to transmit, using broadcast CAMs, its ego-vehicle dynamics (e.g., its position and speed). The CAMs are generally periodically sent with a period varying from 100 milliseconds to one second depending, for example, on the speed of the originating ITS-S.

It is also to be noted that EN 302 637-3 (V1.3.1 of April 2019) standard defines the Decentralized Environmental Notification Basic Service, that may be used by an originating ITS-S to send, using broadcast DENMs, notifications to other ITS-Ss, such as warnings or alerts. Such a message notifies an event (e.g., a road hazard, driving environment information, traffic condition information, etc.) detected by the originating ITS-S.

ETSI TS 103 031 is specifying a set of infrastructure based ITS messages such as:
- IVIM: In Vehicle Information Message that supports mandatory and advisory road signage such as contextual speeds and road works,
- SPATEM/MAPEM: Signal and Phase Timing and Map data extended messages that can be analysed by vehicles approaching to a traffic light intersection for application such as the Green Light Optimized Speed Advisory (GLOSA), and
- ETSI ITS has defined SPATEM (SPAT Extended Message) and MAPEM (MAP Extended Message) that are based on the data element of SPAT and MAP are defined by an ISO standard (CEN ISO/TS 19321-2015: "Intelligent transport systems - Cooperative ITS - Dictionary of in-vehicle information (IVI) data structures").

Each ITS station has an environment model called a Local Dynamic Map (LDM) that is regularly updated with highly dynamic data to locate vehicles, pedestrians, bicycles, etc., in the vicinity of the ITS station. The LDM is updated using information from on-board sensors and completed with information from received ITS messages such as awareness messages containing the ego-position and the speed of connected vehicles (CAMs) and/or of connected Vulnerable Road Users (VAMs) and such as Collective perception messages (CPMs) containing the perceived objects (e.g. vehicles, motorbikes, bicycles or pedestrians) from sensor-equipped ITS stations. CPMs improve the local perception ability (larger field of view, non-connected objects etc.).

Additional ITS messages called Manoeuvre Coordination Messages (MCMs) are now being specified to coordinate automated vehicles to provide a protocol allowing automated vehicles to negotiate their trajectories together (based on ETSI TR 103 578 pre-standardization study report) or automated vehicles to reserve space and time on the road (based on SAE J3186) for use cases such changing lane on a highway or lane merging. MCMs can be used between vehicles to negotiate a manoeuvre but also infrastructure-based system can also be involved to coordinate the manoeuvres. A manoeuvre request can be initiated by a vehicle or by an infrastructure-based system such as a Road Side Unit (RSU).

A Road Side Unit can analyse the traffic motion in a monitored area and can assist vehicles in this area to achieve a particular manoeuvre using MCMs. An example of use case is to assist a vehicle to turn left in an uncontrolled intersection. Various types of MCMs are defined, such as agreement seeking (all participants have to agree) or prescriptive one (from authorities).

MCMs as studied by ETSI ITS TR 103 578 are defining a set of trajectories for each vehicle concerned by the manoeuvre. MCMs as specified by SAE J3186 have a space and time reservation of the road resources for each involved vehicle in a manoeuvre.

Although these solutions are effective, there is a constant need for improvement, in particular to simplify existing mechanisms, improve their efficiency and reduce the volume of data exchanged.

### SUMMARY OF THE DISCLOSURE

The present disclosure has been devised to address one or more of the foregoing concerns.

In this context, there is provided a solution to improve detecting and/or reporting of malfunctioning entities in C-ITS.

According to a first aspect of the disclosure, there is provided a method, in an Intelligent Transport System, ITS, of improving manoeuvre coordination, the method comprising, in a coordinating ITS station, ITS-S:
identifying a manoeuvre to be carried out, the manoeuvre involving a plurality of entities,
at least one of the entities comprising a coordinated ITS-S,
obtaining at least one traffic rule to be followed by the at least one entity to carry out the manoeuvre, and
generating and transmitting a Manoeuvre Coordination Message, MCM, comprising a first description structure for describing the at least one obtained traffic rule and a second description structure for describing an environment wherein the manoeuvre is to be carried out, the second description structure being different from the first description structure.

Accordingly, the method of the disclosure makes it possible to reduce the complexity of ITS-Ss assisting vehicles to achieve particular manoeuvres, in particular RSU, to reduce the amount of data exchanged over V2X, and to make it easier for ITS-Ss embedded in vehicles to analyse advices received.

According to some embodiments, the first description structure comprises an identifier of the at least one entity.

Still according to some embodiments, the second description structure comprises a description of the environment wherein the manoeuvre is to be carried out. According to other embodiments, the second description structure comprises a reference to an ITS message describing the environment wherein the manoeuvre is to be carried out.

Still according to some embodiments, the first description structure comprises a reference to a zone of an environment described in the second description structure, wherein the manoeuvre is to be carried out in the zone referenced.

Still according to some embodiments, the first description structure comprises an indication of a time period during which the manoeuvre may be carried out.

Still according to some embodiments, the at least one obtained traffic rule comprises a minimum or a maximum speed limit, a minimum or a recommended gap between the at least one entity comprising the coordinated ITS-S and another entity, a recommended lane, and/or a road sign code.

Still according to some embodiments, the method further comprises monitoring an area and identifying the manoeuvre.

Still according to some embodiments, the method further comprises receiving, from the at least one entity comprising the coordinated ITS-S, an indication of an intention to carry out the manoeuvre.

Still according to some embodiments, at least one of the first and the second description structures is complying with the In Vehicle Information, IVI, format. According to other embodiments, at least one of the first and the second description structures is complying with the Signal and Phase Timing, SPAT, format. Still according to other embodiments, at least one of the first and the second description structures is complying with the infrastructure-to-vehicle, I2V, format.

Still according to some embodiments, the MCM generated is addressed to a set of several entities of the plurality of entities, the at least one traffic rule being at least one traffic rule to be followed by each entity of the set of several entities.

Still according to some embodiments, the generated and transmitted MCM is referred to as the first MCM, the method further comprising generating and transmitting, by the coordinating ITS-S, a second MCM including one first description structure for describing at least one updated traffic rule to be carried out within the environment described in the second description structure contained in the first MCM .

According to a second aspect of the disclosure there is provided a method, in an Intelligent Transport System, ITS, of improving manoeuvre coordination, the method comprising, in a coordinated ITS station, ITS-S:
receiving a Manoeuvre Coordination Message, MCM, comprising a first description structure for describing at least one traffic rule and a second description structure for describing an environment wherein a manoeuvre is to be carried out, the second description structure being different from the first description structure, the at least one traffic rule being to be followed by an entity comprising the coordinated ITS-S to carry out the manoeuvre, the manoeuvre involving the entity comprising the coordinated ITS-S and another entity.

Accordingly, the method of the disclosure makes it possible to reduce the complexity of ITS-Ss assisting vehicles to achieve particular manoeuvres, in particular RSU, to reduce the amount of data exchanged over V2X, and to make it easier for ITS-Ss embedded in vehicles to analyse advices received.

According to some embodiments, the method further comprises analysing the MCM received and determining whether the entity comprising the coordinated ITS-S agrees to follow the traffic rule.

Still according to some embodiments, the method further comprises, in response to the determining, generating and transmitting a MCM response to the MCM received.

Still according to some embodiments, at least one of the first and the second description structures is complying with the In Vehicle Information, IVI, format, the Signal and Phase Timing, SPAT, format, or the infrastructure-to-vehicle, I2V, format.

According to a third aspect of the disclosure there is provided a Manoeuvre Coordination Message, MCM, to transmit information in an Intelligent Transport System, ITS, the MCM comprising a first description structure for describing at least one traffic rule to be followed by at least one entity comprising a coordinated ITS-S to carry out a manoeuvre and a second description structure for describing an environment wherein the manoeuvre is to be carried out, the second description structure being different from the first description structure, the manoeuvre involving the at least one entity and at least another entity.

Accordingly, the MCM of the disclosure makes it possible to reduce the complexity of ITS-Ss assisting vehicles to achieve particular manoeuvres, in particular RSU, to reduce the amount of data exchanged over V2X, and to make it easier for ITS-Ss embedded in vehicles to analyse advices received.

According to another aspect of the disclosure there is provided a device comprising a processing unit configured for carrying out each of the steps of the method described above.

This aspect of the disclosure has advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an ITS system in which some embodiments of the present disclosure may be implemented;
**Figure 2** illustrates an example of an ITS station in which some embodiments of the present disclosure may be implemented;
**Figure 3** illustrates an example of a structure of a manoeuvre coordination message according to some embodiments of the present disclosure;
**Figure 4** illustrates an example of a structure of a manoeuvre advice container according to some embodiments of the present disclosure, based on SPAT/MAP data elements;
**Figure 5** illustrates an example of a structure of a manoeuvre advice container according to some embodiments of the present disclosure, based on In Vehicle Information (IVI) data elements;
**Figure 6** illustrates an example of a structure of a manoeuvre advice container according to some embodiments of the present disclosure, based on an I2V advice container;
**Figure 7** schematically illustrates, using a flowchart, an example of steps of a method for generating MCMs at a coordinating ITS-S, for example a roadside coordinating ITS-S, according to some embodiments of the present disclosure;
**Figure 8** schematically illustrates, using a flowchart, an example of steps of a method for processing MCMs at a coordinated ITS-S, for example a vehicle ITS-S, according to some embodiments of the present disclosure;
**Figure 9** illustrates an intelligent transportation system in a situation according to which vehicles are entering a highway using an entry ramp, wherein an IVI Advice is used for managing vehicles already located in the corresponding portion of the highway and vehicles entering the highway;
**Figure 10** illustrates an intelligent transportation system monitoring a toll barrier, wherein SPAT Advices are used to manage vehicles arriving at the toll barrier;
**Figure 11** illustrates an intelligent transportation system (ITS) monitoring a Road Work Zone (RWZ) on a highway, wherein IVIM Advices are used to manage vehicles arriving at the RWZ; and
**Figure 12** is a schematic representation of an example of a communication ITS-S device configured to implement some embodiments of the present disclosure.

### DETAILED DESCRIPTION OF THE DISCLOSURE

The names of the lists and elements (such as data elements) provided in the following description are only illustrative. Embodiments are not limited thereto and other names could be used.

The inventors have determined that the existing mechanisms for assisting vehicles to achieve particular manoeuvres using Manoeuvre Coordination Messages (MCMs) may lead to difficulties for RSUs since the vehicle control algorithms and dynamics differ from a vehicle to another and a different trajectory than the proposed one might be followed by a vehicle if it could not achieve the suggested one. In addition, all vehicles might not be connected or have the same automation levels especially at the start of deployment of MCMs. For example, some vehicles might be able to take into account an updated speed limit (longitudinal control) but not changing their trajectory (lateral control). Furthermore, the presence of VRUs or other obstacles may impact the global situation suddenly, leading to compute and transmit a new set of trajectories. The inventors have also determined that a vehicle receiving a MCM request might not be able to execute the suggested trajectories and may receive frequent update of the suggested trajectory by the RSU.

According to some embodiments of the disclosure, MCMs are used to transmit a description of an environment wherein a manoeuvre is to be carried out and to transmit an advice corresponding to one or more traffic rules to be followed to carry out the manoeuver, such as a maximum road speed, a stop, a give way, and the like. Such MCMs are addressed to one or more ITS-Ss of entities involved in the manoeuver, for example to the ITS-Ss of all entities located in a given zone of the environment wherein the manoeuvre is to be carried out. The environment and the traffic rules are described in different structures. For example, the traffic rules may be described in traffic rule containers compliant with the In Vehicle Information, IVI, format, the Signal and Phase Timing, SPAT, format, or the infrastructure-to-vehicle, I2V, format. The environment may be described in road description containers.

### Intelligent Transport System

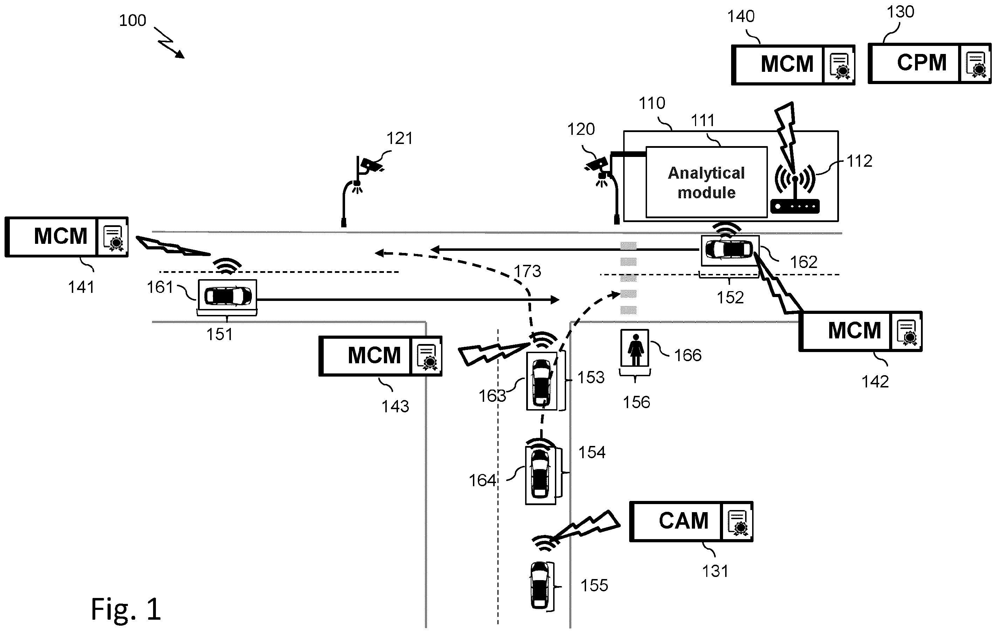

**Figure 1** illustrates an example of an ITS system in which some embodiments of the present disclosure may be implemented.

According to this example, an ITS station (ITS-S), that may generate and transmit Manoeuvre Coordination Messages (MCMs) such as MCM 140, is embedded in a road-side unit, RSU, 110. It is observed that RSUs have generally more powerful resources to analyse a global situation than moving vehicles. For example, an RSU may have a wider field of view than an ITS-S embedded within a vehicle, multiple fields of view, fast access to other information such as traffic conditions, traffic light status, knowledge of objects that populate the monitored area, etc.

In particular, a wide view of the area monitored by an RSU allows the RSU to detect conflicting trajectories or traffic jam situation mixing vehicles that are ITS connected and not connected, and/or when vehicles cannot see each other (e.g. due to an occlusion at an intersection).

As illustrated, ITS 100 is implemented at an intersection and comprises fixed road side unit 110 and several entities that may carry or embed an ITS station (ITS-S) each, for transmitting and/or receiving ITS messages within the ITS. The several entities may be for example, vehicles 151, 152, 153, 154 and 155 and pedestrian 156.

Fixed road side unit 110 includes a set of sensors, such as image sensors, here video cameras 120 and 121, and an analytical module to analyse data provided by the stationary sensors and ITS messages received from other ITS-S (e.g. CAM, CPM ITS messages), such as analytical module 111. Each of the video cameras 120 and 121 is configured to monitor or scan a portion of the area monitored by the RSU (here the road intersection), making it possible to reproduce images of the monitored area. Other sensors such as LIDARs (Laser Imaging Detection And Ranging devices) may also be used.

The sensors are connected to the analytical module (e.g. video cameras 120 and 121 are connected to analytical module 111) so that the analytical module processes the stream captured by the sensors/video cameras to analyse the situation. The analytical module and the sensors may be separate from or embedded within the same physical road side unit. For example, the analytical module may be wire-connected to sensors that may be remote (i.e. not embedded in the road side unit).

The processing of the data received from the sensors by the analytical module, 111, aims at detecting objects potentially present in the monitored area, referred to as "perceived objects" or "detected objects" hereinafter. Mechanisms to detect such objects are well known by the one skilled in the art.

The analytical module is also configured to output a list of the perceived objects respectively associated with corresponding description information referred to as "state vector". The state vector for a perceived object may include for instance parameters such as a position, a kinematic, temporal information, behavioural or object type classification information, etc.

Therefore, the analytical module may identify, among the perceived objects, Vulnerable Road Users (VRUs) such as pedestrians, cyclists as well as motorcyclists and also persons with disabilities or reduced mobility and orientation. It may also identify objects such as trees, road construction/work equipment (e.g. road barriers), and so on.

The VRUs may be considered as an ITS-S when carrying an ITS equipment, for example an ITS equipment included in a smartphone, a satnav system, a smart watch, or in a cyclist equipment.

According to the example illustrated in Figure 1, analytical module 111 may perceive the following objects when scanning the monitored area using the camera or LiDAR sensors:
- objects 161, 162, 163, and 164 respectively corresponding to vehicles 151, 152, 153, and 154 on the roadway and
- object 166 corresponding to pedestrian 156 on the sidewalk.

In addition, the perceived objects may be classified. For example, if the perceived objects are ITS stations, they can be classified as vehicles, VRUs, RSUs, or any another ITS-S types. Such object type classification may be based for example on predetermined rules, provided during the setting up of road side unit 110, or more generally the ITS-S. ETSI TS 103 324 V2.1.1 defines for instance the object class for "vehicle", "VRU" or "Group" main class categories with possible subclasses such as "passengerCar" for the "vehicle" category. Of course, other categories, more specific, may be defined.

As illustrated in Figure 1, road side unit 110 further comprises a Roadside ITS-S, R-ITS-S, 112, for example as specified in the reference architecture of an ITS station defined in version V1.1.1 of the ETSI EN 302 665 specification. By the means of roadside, ITS-S 112, RSU 110 can share information relative to the perceived objects. using CPM 130 as specified by ETSI TS 103 324. RSU 110 can also receive information from the other ITS-Ss such as the CAM (Cooperative Awareness Message) from connected vehicles. As illustrated in Figure 1, the ITS-S of vehicle 155 is sharing regularly (at least once a second) its ego-position, speed, and heading to other ITS-Ss using CAM 131 (as specified in EN 302 167-2). Similarly, VRU Awareness Messages, VAMs, defined in document ETSI TS 103 300-3, can be sent by VRU ITS-S to share their own position and kinematic or the sharing of the information corresponding to a group of VRUs (VRU cluster).

The ITS messages are usually broadcast by their originating ITS-S, so that any other ITS-S may exploit them.

All the messages exchanged over ITS 100 help each ITS-S to have a good level of knowledge of its environment in terms of which objects are present, where and how they behave.

According to some embodiments of the present disclosure, the analytical module comprises a manoeuvre coordination controller with functions to analyse the trajectories of objects present in the monitored area. The trajectories may be predicted by analysing the behaviour of the objects perceived by the roadside sensors or reported through received ITS messages.

The manoeuvre coordination controller can also obtain some trajectory intention for an automated vehicle equipped with an ITS-S through a Manoeuvre Coordination Message (MCM) such as MCM 143 generated and transmitted by the ITS-S of vehicle 153 that could indicate that this vehicle wants to turn to the left at the intersection (trajectory 173).

The manoeuvre coordination controller may trigger a MCM requests to other vehicles to facilitate the turn to the left of the vehicle 153. To that end, RSU 110 generates and transmits a MCM request 140. Receiving ITS-S can then accept or reject the request and answers to the RSU using a MCM response such as MCM responses 141 and 142 generated and transmitted by the ITS-Ss of vehicles 151 and 152, respectively.

### Architecture of an ITS station

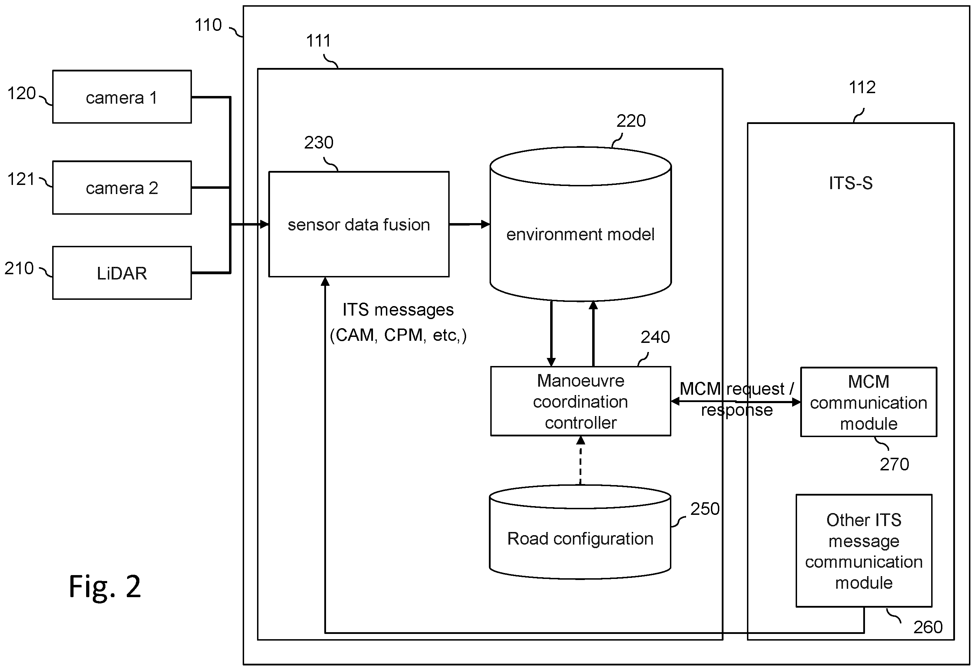

**Figure 2** illustrates an example of an ITS station in which some embodiments of the present disclosure may be implemented.

For the sake of illustration, it is considered here that the illustrated ITS station is the RSU referenced 110 in Figure 1. However, it may be another type of ITS-S-equipped entity.

As mentioned above by reference to Figure 1, analytical module 111 is connected to one or more sensors monitoring an area such as a road intersection. These sensors may include cameras 120 and 121 but also other sensors such as LIDAR 210 or mere radar devices.

The perceived objects detected by each sensor are analysed by sensor data fusion module 230 in order to combine or merge the same objects detected by several sensors. Consideration of similarity between objects from different sensors can be based on their object types, positions, kinetics/dynamics (speed, acceleration), trajectories, etc. A level of confidence may also be computed when scrutinizing the similarities of these information items and the merging can be affected when the level of confidence is high enough.

Newly perceived objects or updates about already-tracked objects are used to update the environment model 220 of the ITS-S. Received ITS messages, CAMs, VAMs, and CPMs, are handled by the communication module 260 and provided as input of the sensor data fusion module 230 that updates the environment model 220.

The environment model is also known as the Local Dynamic Map and contains a list of the perceived objects. Each ITS-S has its own environment model 220.

The environment model contains a list of objects, containing information for each tracked object such as:
- a unique identifier to track the object,
- a time of measurement of data relating to the object,
- a list of the sensors that have perceived the object,
- an object relative distance and speed from the ITS-S reference position, with a corresponding confidence level,
- a type of object (e.g., vehicle, pedestrian, etc.), with a corresponding confidence level, and
- an associated ITS station identifier, with a corresponding confidence level.

The manoeuvre coordination controller 240 is in charge of analysing the situation and triggering, when necessary, manoeuvre request to coordinate vehicles in the monitored area.

The manoeuvre coordination controller 240 provides items of information to generate MCMs to the MCM communication module 270. The MCM communication module 270 provides to the manoeuvre coordination controller 240 the MCMs received from other ITS-Ss.

### Message format

According to some embodiments of the disclosure, the structure of the MCMs is modified (compared to the format given in ETSI TR 103 578) so that a roadside unit can provide a manoeuvre advice to the vehicles to be coordinated using data elements used for infrastructure to vehicle messages such as IVIM or SPAT/MAP messages.

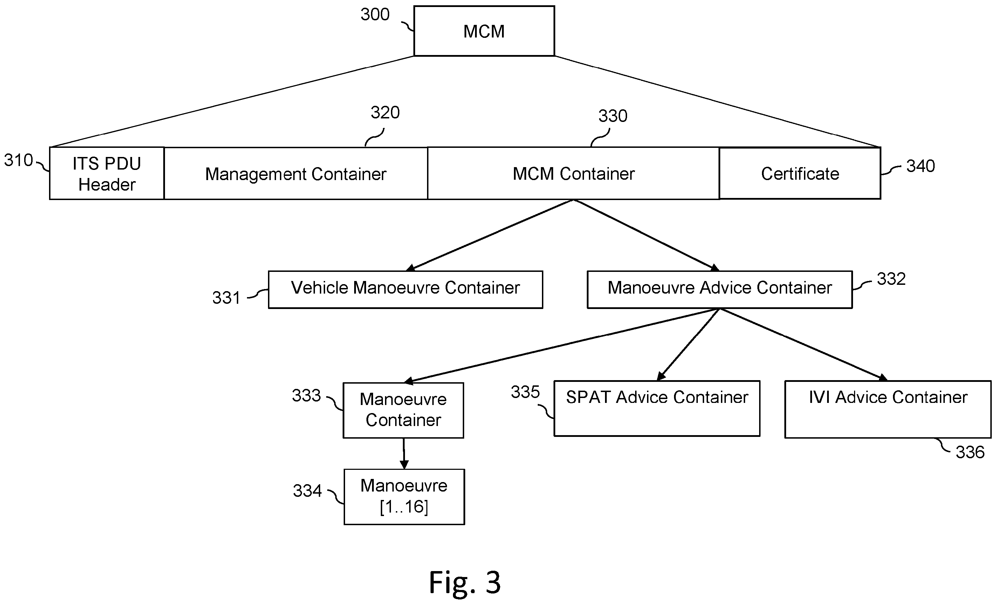

**Figure 3** illustrates an example of a structure of a manoeuvre coordination message according to some embodiments of the present disclosure.

The illustrated MCM structure, referenced 300, is based on the MCM structure proposed in ETSI TR 103 578 (V0.0.12). It comprises an "ITS PDU Header" referenced 310, a "Management Container" referenced 320, a "MCM Container" referenced 330, and a "Certificate" referenced 340.

ITS PDU header 310 is a common header that includes information of the protocol version, the message type, and the ITS-S identifier (ID) of the originating ITS-S.

The management container 320 contains data elements describing the originating ITS-S such as:
- a reference time that represents the timestamp of the message,
- a reference position that is the geographical position of the originating ITS-S at the reference time, and
- a station type that represents the type of the originating ITS-S (e.g. RSU or vehicle).

The certificate 340 is attached to the MCM 300 to certify the authenticity of the originating ITS-S and its permission to provide manoeuvre coordination message and the information it contains.

The MCM container 330 may be either a "Vehicle Manoeuvre Container" referenced 331 or a "Manoeuvre Advice Container" referenced 332.

Vehicle manoeuvre containers 331 are periodically exchanged between ITS-S embedded in vehicles in order to implement vehicle to vehicle manoeuvre cooperation based on an agreement seeking concept. The vehicle manoeuvre container comprises a list of trajectories with a short-term time horizon (e.g. 30 seconds) and the current vehicle automation state. The list of trajectories contains at least a reference trajectory corresponding to the target trajectory followed by the vehicle. Alternative trajectories or request trajectories can also be included in the vehicle manoeuvre container 331. Alternative trajectories represent a cooperation offer from the ego-vehicle to another vehicle. Request trajectory is a trajectory for which the ego-vehicle needs a cooperation to achieve its objective. Trajectories have a common format consisting in a unique trajectory identifier and the future positions of the vehicle over time. Only vehicle ITS-S can generate a MCM with a vehicle manoeuvre container.

The manoeuvre advice container 332 can be generated either by a vehicle ITS-S or a roadside ITS-S (RSU). It may correspond, for example, to the manoeuvre container referenced 333, to the SPAT advice container referenced 335, or to the IVI advice container referenced 336.

Manoeuvre container referenced 333 may be similar to the one proposed in ETSI TR 103 578. It may contain a sequence of 16 manoeuvres referenced 334. Each manoeuvre is targeted one vehicle (called executant) that is invited to follow the suggested manoeuvre.

Each of the manoeuvres 334 comprises the following data elements:
- a manoeuvre identifier (*manoeuvreld*)
- a targeted vehicle identifier (*executantld*) corresponding to the ITS ID (vehicle pseudonym), that may be obtained through CAMs or MCMs transmitted by the vehicle ITS-S,
- a position and heading of the targeted vehicle (*executantPosition, executantHeading*)*,*
- a suggested or requested trajectory (trajectory), and
- (optionally) an advice for the automation mode to be followed by the vehicle (*automationAdvice*)*.*

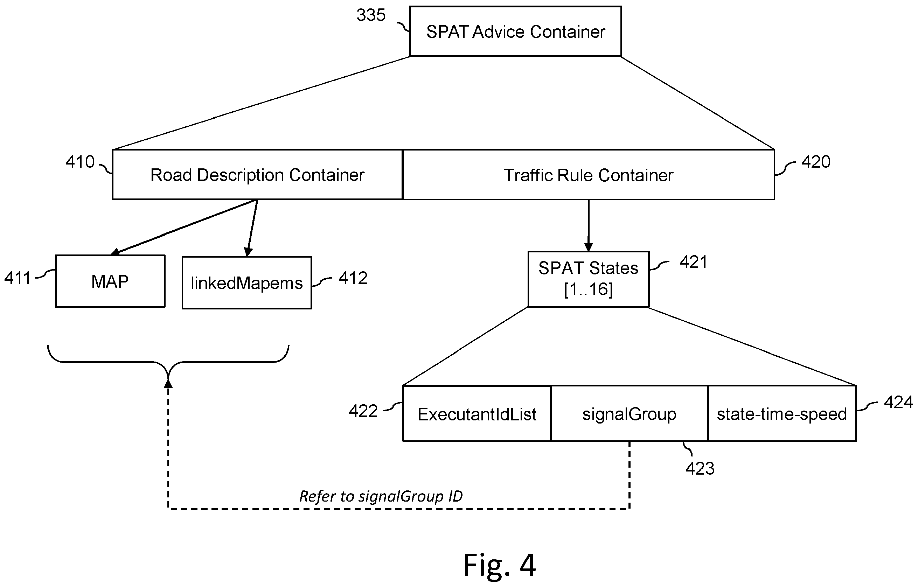

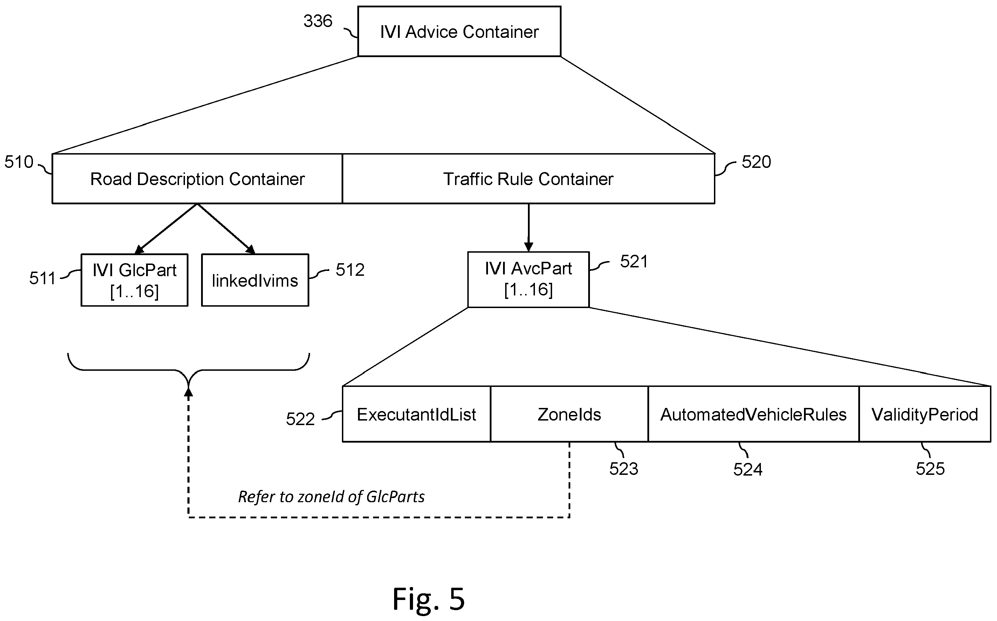

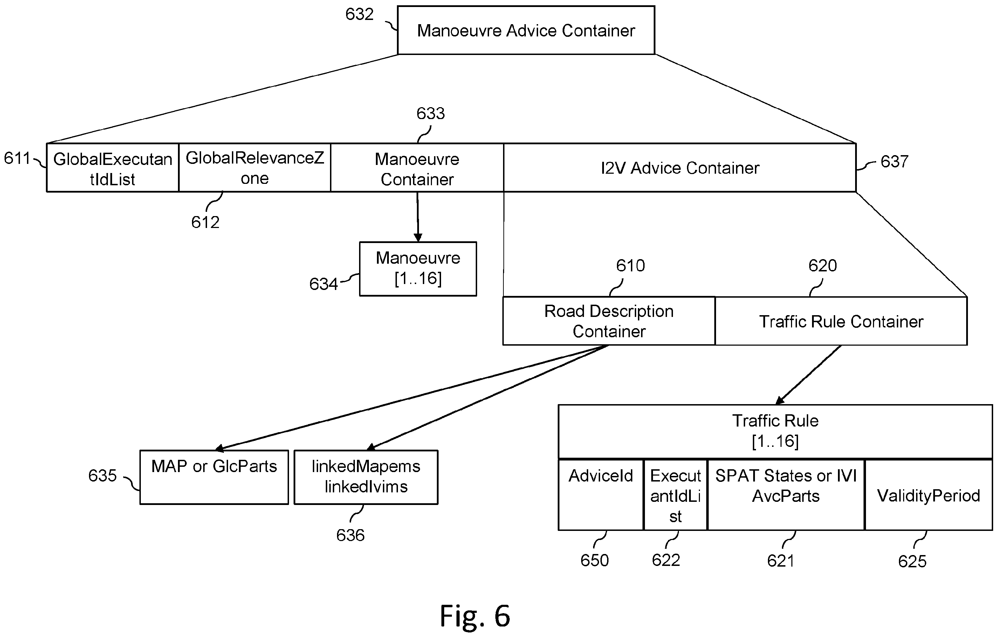

Since it may be complex for a RSU to compute a set of manoeuvres for each targeted vehicles and since it may require frequent message updates to update regularly the trajectory information, new types of manoeuvre advice containers are proposed to simplify the manoeuvre advice from the RSU to targeted vehicles, in particular the following:
- a SPAT advice container referenced 335 that is described in more detail with reference to Figure 4,
- a IVIM advice container referenced 336 that is described in more detail with reference to Figure 5,
- an I2V advice container that is described with reference to Figure 6 (not illustrated in Figure 3).

**Figure 4** illustrates an example of a structure of a manoeuvre advice container (e.g., manoeuvre advice container 332 in Figure 3) according to some embodiments of the present disclosure, based on SPAT/MAP data elements.

According to ETSI TS 103 301, SPATEM (SPAT Extended Message) and MAPEM (MAP Extended Message) ITS messages are generated and regularly transmitted from the infrastructure to vehicles. ETSI ITS has defined SPATEM and MAPEM based on the data element of SPAT and MAP (defined by an ISO standard: CEN ISO/TS 19321-2015, "Intelligent transport systems - Cooperative ITS - Dictionary of in-vehicle information (IVI) data structures").

MAP data describe the geometry of a road intersection while SPAT data contains the signal and phase timing of a traffic light intersection.

SPAT/MAP data can be analysed by ITS-S of vehicles approaching to a traffic light intersection to optimise their speed in advance, for example to have the green light rather than the red light (GLOSA applications: Green Light Optimal Speed Applications). Connected vehicles already have some ability to analyse the SPAT/MAP data to inform the driver about the recommended speed.

According to some embodiments, SPAT advice container referenced 335 is used to provide advice to a target vehicle or to a set of vehicles, instead of sending a trajectory suggestion to a target vehicle as suggested in the standard proposal.

As illustrated, SPAT advice container 335 may comprise a road description container referenced 410 and a traffic rule container referenced 420.

The road description container 410 comprises a description of an environment wherein the manoeuvre is to be carried out or a reference to an ITS message comprising such a description. The road description container 410 may either contain MAP data 411 to describe the road structure or links to an existing MAP message identifier if the RSU has already provided this message as illustrated with linkedMapems 412. MAP data contain a description of the lanes, their possible intersections, their possible connections, and signal groups used as a phase identifier from SPAT message.

As illustrated, the traffic rule container 420 comprises SPAT States data element referenced 421. SPAT States data element 421 is modified compared to SPAT message as defined in the standard proposal by adding a list of the vehicles referenced 422 (ExecutantldList containing one or several ITS ID) concerned by the SPAT signal.

SPAT States data element 421 also comprises signalGroup element 423 that is used to cross-reference MAP data 411 or linked data of a MAPEM message referred by the identifier 412. This item of information makes it possible for the receiving vehicles to analyse whether they are concerned or not by the suggestion. Even if a vehicle identifier is provided in the ExecutantldList, the vehicle should check whether its current position and its target trajectory is concerned by the signal group referenced by the MAP.

SPAT States data element 421 further comprises the "state-time-speed" referenced 424. The state corresponds to the phases of the traffic light (that could be simplified to Green, Orange, or Red lights) but indeed more states are provided depending on the priority rules of the intersection, for example as follows:

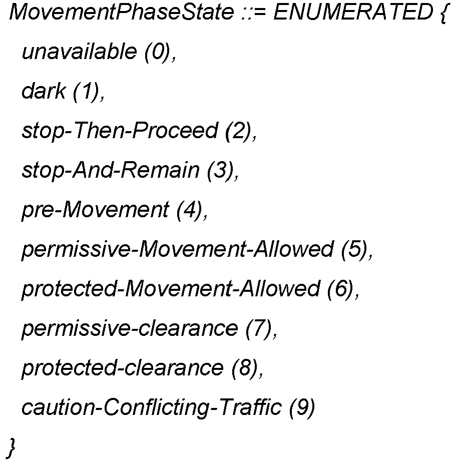

Optionally, additional information such as the timing change may be provided in the data component 424. Advisory speed may also be provided optionally in the data component 424.

According to some embodiments of the present disclosure, a RSU could advice vehicles driving at an intersection to use SPAT advices type instead of trajectory-based manoeuvre container (e.g., manoeuvre container 333 in Figure 3). In such a case, the targeted vehicles use their own automated driving system to compute their trajectory based on the information contained in the SPAT advice (e.g., traffic light phase and speed advice) which are easier to compute by the targeted vehicles than by the RSU.

In a case of a prescriptive situation (e.g. emergency vehicle, roadworks, etc.), a destination "laneld" as referred in the MAP could be provided to the target vehicle to follow a specific direction (e.g., it may be mandatory to turn to the right as other lanes are no more allowed).

**Figure 5** illustrates an example of a structure of a manoeuvre advice container (e.g., manoeuvre advice container 332 in Figure 3) according to some embodiments of the present disclosure, based on In Vehicle Information (IVI) data elements.

IVI messages (IVIMs) are used by road operators or traffic management centres to provide road signage such as contextual speeds and road work warnings. IVIM either provides information of physical road signs such as static or variable road signs, virtual signs, or road works (as specified in ETSI TS 103 301).

According to some embodiments of the present disclosure, an IVI advice container (e.g., IVI advice container 336 in Figure 3) may be used by the RSU for suggesting identified target vehicles to follow some specific traffic rules, enabling a set of vehicles to cooperate. Similarly to the SPAT advice container described by reference to Figure 4, the IVI advice container 336 comprises a Road Description Container referenced 510 and a Traffic Rule Container referenced 520.

The road description container 510 comprises a description of an environment wherein the manoeuvre is to be carried out or a reference to an ITS message comprising such a description. The road description container 510 comprises either:
- IVI GlcParts, a sequence of IVI GlcPart data elements referenced 511. From 1 to 16 may be described. Each IVI GlcPart corresponds to a road zone identified by its zone identifier and comprises:
   - a zone identifier (zoneld) which is an identifier of the road zone and
   - a zone which is a description of the zone that may be defined as a segment or a computed segment of a polygon area as defined in IVIM specifications,
- linkedlvims referenced 512, a list of references pointing to IVIMs that are applying to the road zones to which the traffic rules should apply. Indeed, if the RSU has already transmitted IVIMs, only references to relevant IVIMs are provided to save radio bandwidth. These IVIMs contain GlcParts describing road zones identified by their zone identifiers such as in IVI GlcPart 511.

The traffic rule container 520 comprises:
- IVI AvcParts, a sequence of IVI AvcPart data elements referenced 521. From 1 to 16 parts may be described. Each IVI AvcPart corresponds to a rule applicable to automated vehicles and comprises:
   - ExecutantldList referenced 522 that contains the list of vehicle ITS IDs for which the rules are applicable,
   - ValidityPeriod referenced 525 that contains the start time and end time to indicate what is the period where the proposed advice is valid, and
   - other fields that are similar to the ones contained in AvcPart of IVIMs as described in TS 103 301:
      ∘ Zonelds, referenced 523, that is used to indicate applicable zones in reference to the zone identifiers defined in the road description container 510. If Zonelds are not present, only the ExecutantldList is used to identify whether a vehicle is concerned by the advice. Two types of zones may be referred to, as follows;
         ▪ detectionZonelds that are used to indicate where are located the target vehicle at the time of the MCM construction and
         ▪ relevanceZonelds that are used to indicate what are the relevance zones where the MCM advice is applicable,
      ∘ AutomatedVehicleRules referenced 524 that is used to indicate the rules that are applicable to the target vehicles. It may contain one or several of the following data elements:
         ▪ priorityLevel that is used to state about the priority level of the information. Compared to its use in an IVIM, this field inside a MCM AVI Advice Container could be used to specify the type of MCM request. For example, value 0 may indicate a generic advice, value 1 may indicate an agreement seeking advice, and value 2 may indicate a prescriptive advice,
         ▪ allowedSameAutomationLevel that is used to indicate the allowed SAE levels for the automated vehicle (SAE level are defined from 0 to 5, wherein 0 indicates that no automation is allowed and 5 indicates that a full automated driving mode is allowed),
         ▪ minGapBetweenVehicles that is used to indicate the minimum gap value between vehicles,
         ▪ recGapBetweenVehicles that is used to indicate the recommended gap value between vehicles,
         ▪ automatedVehicleMaxSpeedLimit that is used to indicate the maximum speed limit,
         ▪ automatedVehicleMinSpeedLimit that is used to indicate the minimum speed limit, and
         ▪ roadSignCodes that is used to indicate a road sign code.

According to some embodiments, additional fields may be used to define advice that is not in TS 103 301, for example as follows:
▪ recommendedVehicleSpeed that is used to indicate the recommended speed limit. Its value should be chosen between the maximum and minimum limits and
▪ recommendedLane that is used to indicate what is the recommended lane when the road zone has multiple lanes.

Compared to IVIMs specified in TS 103 301, the IVI Advice Container 336 allows the RSU to define rules targeting specifically a set of vehicles concerned by a manoeuvre cooperation using the ExecutantldList 522.

If the road description container is not provided, the traffic rules should apply to the vehicles that ITS identifier is indicated in the ExecutantldList 522.

A MCM IVI advice may mix some traffic rules targeting a set of vehicles with their ITS identifier listed in the ExecutantldList 522 and some other traffic rules targeting some vehicles present in relevance zones specified by the Zonelds 523. Accordingly, new vehicles entering in the zones concerned would follow the traffic rules indicated, based on the vehicle location.

**Figure 6** illustrates an example of a structure of a manoeuvre advice container (e.g., manoeuvre advice container 332 in Figure 3) according to some embodiments of the present disclosure, based on an I2V advice container.

According to the embodiments illustrated in Figure 6, similar type of information as the one disclosed by reference to Figures 4 and 5 is added to the MCMs, but using a different message structure.

As illustrated, the MCM manoeuvre advice container 632, that may replace manoeuvre advice container 332 in the MCM illustrated in Figure 3, comprises additional elements compared to the manoeuvre advice container 332:
- GlobalExecutantldList 611 that contains all ITS-IDs concerned by at least one of manoeuvre described in the manoeuvre container 633 or in the I2V advice container 620 and
- GlobalRelevanceZone 612 that contains a description of the geographical zone (described as a polygon area) where the I2V advice container 620 are relevant.

Both information may be used by a receiving vehicle ITS-S to filter the received MCMs to easily analyse whether it is concerned or not by the MCMs received and thus, to decode only the relevant the Manoeuvre container 633 or I2V advice container 620.

In these embodiments, Manoeuvre container 633 is similar to the Manoeuver container 333 in Figure 3, with a sequence of manoeuvres 634 similar to the sequence of manoeuvres 334 in Figure 3.

The I2V Advice Container referenced 637 provides items of information that are similar to the ones of the SPAT Advice 335 or the IVI Advice containers 336, but organised differently. It contains a road description container 610 and a traffic rule container 620.

The road description container 610 comprises a description of an environment wherein the manoeuvre is to be carried out or a reference to an ITS message comprising such a description and may contain MAP or GlcParts referenced 635 and references to other MAPEMs or IVIMs in the structure referenced 636.

The traffic rule container 620 may contain a set of traffic rules. For each rule, it may comprise the target vehicles (ExecutantldList referenced 622 associated with a validity period representing the time period during which the manoeuvre may be carried out (ValidityPeriod) referenced 525) and the SPAT State or IVI AvcParts in the data element 612. Each rule is identified with an identifier (Adviceld) 650 so that a vehicle accepting or rejecting advice may refer to it in the its MCM response.

### Example of steps for generating and processing MCMs

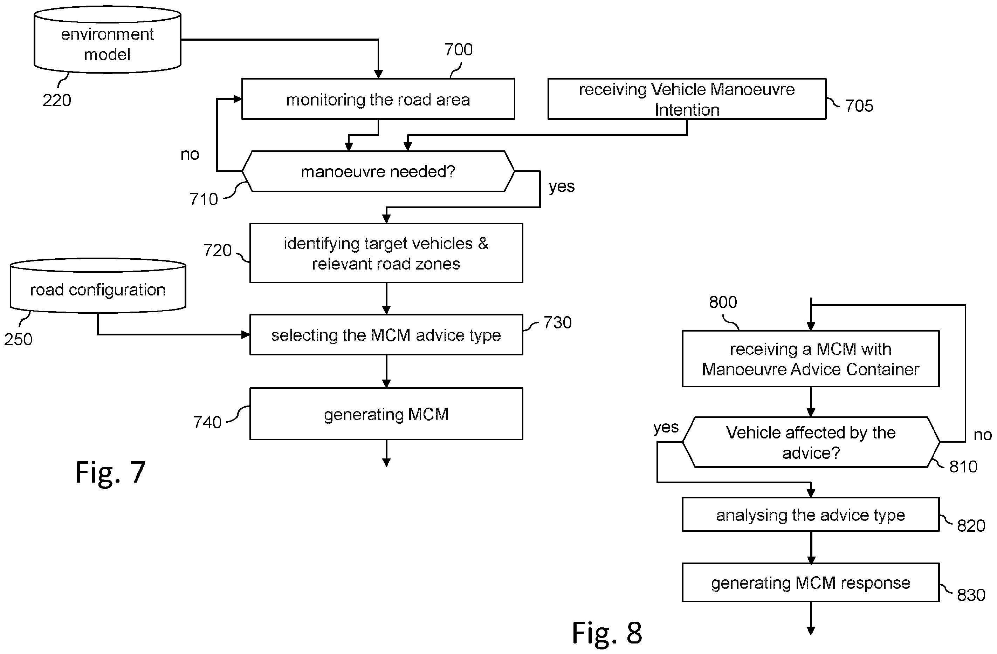

**Figure 7** schematically illustrates, using a flowchart, an example of steps of a method for generating MCMs at a coordinating ITS-S, for example a roadside coordinating ITS-S, according to some embodiments of the present disclosure.

As illustrate, a first step is directing to monitoring an area associated with the considered ITS-S (step 700). Such a step may be based on a manoeuvre coordination controller module such as manoeuvre coordination module 240 in Figure 2, that retrieves the list of objects from an environment model 220. In parallel of the monitoring of the area, the manoeuvre coordination controller 240 may receive manoeuvre vehicle intentions from the MCM communication module 270 (step 705). Manoeuvre vehicle intentions may be generated by a vehicle ITS-S using a MCM containing a Vehicle Manoeuvre Container such as the one referenced 331 in Figure 3. In other embodiments, the vehicle intention could be included in a CAM from a vehicle ITS-S to reduce the number of ITS messages and to have in the same CAM the current state of the ego-vehicle and its intention (short-term future trajectory).

Next, in step 710, a test is carried out by the manoeuvre coordination controller 240 to determine whether a manoeuvre suggestion is needed. If no manoeuvre suggestion is needed, the manoeuvre coordination controller continues to monitor the road area and to analyse the next received vehicle manoeuvre intentions (i.e., the algorithm loops on steps 700 and 705).

On the contrary, if a manoeuvre is needed, the manoeuvre coordination controller 240 prepares the manoeuvre suggestion in step 720 wherein the vehicles that is the target of the manoeuvre and the relevant road zones are identified.

Next, the MCM advice type is selected (step 730). In addition, data directed to the road configuration of the monitored area are obtained, for example from static map data 250).

According to a first aspect of the present disclosure, if the monitored area is a road intersection, a SPAT Advice type may be selected. This SPAT Advice is prepared using a SPAT Advice Container such as SPAT Advice Container 335 in Figure 3 or a Manoeuvre Advice Container such as Manoeuvre Advice Container 632 in Figure 6.

According to a second aspect of the present disclosure, if the monitored area is a roadway (e.g. highway or a rural road), an IVI Advice type may be selected. This IVI Advice is prepared using an IVI Advice Container such as IVI Advice Container 336 in Figure 3 or a Manoeuvre Advice Container such as Manoeuvre Advice Container 632 in Figure 6.

In this step 730, the manoeuvre coordination controller is obtaining the traffic rules for the target vehicles determined in step 720, making it possible to carry out the manoeuvre.

Next, a MCM is generated and transmitted to the ITS-Ss present in the radio communication coverage of the roadside ITS-S such as ITS-S 112 in Figure 1 using the MCM Communication Module 270 (step 740).

In the step 740, the MCM generation is repeated until the manoeuvre to carry out is terminated. In order to optimize the size of the exchanged data between the coordinating ITS-S and the coordinated ITS-S, the road description container (410, 510 or 610) may be omitted in some MCM generation events, if the same road description container was already transmitted in a previous MCM within a period of time such as 1 second for example (low-frequency container type). Regarding traffic rule containers (420, 520 or 620), they are included in all the MCMs related to the same manoeuvre to carry out (high-frequency container type). The content of the traffic rule might be updated during the progress of the manoeuvre as determined by the manoeuvre coordination controller 240.

**Figure** 8 schematically illustrates, using a flowchart, an example of steps of a method for processing MCMs at a coordinated ITS-S, for example a vehicle ITS-S, according to some embodiments of the present disclosure.

As illustrated, a first step is directed to receiving, in the vehicle ITS-S, a MCM containing a Manoeuvre Advice Container such as Manoeuvre Advice Container 332 in Figure 3.

Next, the vehicle ITS-S determines whether it is affected or not by the received manoeuvre advice (step 810). Such a determination step may be carried out by comparing the vehicle ITS-S identifier with the ones listed in the ExecutantldList data elements of the MCM received (e.g., in the list of vehicles 422 or 522 in Figure 4 or 5, respectively). According to other embodiments based on the Manoeuvre Advice Container of Figure 6, the vehicle ITS first checks whether its ITS-S identifier is contained in the GlobalExecutantldList (e.g., in the GlobalExecutantldList 611 in Figure 6). If the vehicle ITS-S identifier is not part of the identifiers listed in GlobalExecutantldList, the vehicle determines whether its current location and trajectory are part of the GlobalRelevanceZone (e.g., GlobalRelevanceZone 612 in Figure 6).

If it is determined in step 810 that the vehicle is not affected by the manoeuvre, the received advice is not analysed and the process is repeated to process a next MCM received (i.e., the algorithm loops in step 800).

On the contrary, if the vehicle is affected by the manoeuvre advice (i.e., one or more traffic rules to be followed), the advice received is analysed (step 820). To that end, the updated traffic rules characterising the behaviour expected from the roadside coordinating ITS-S are provided as input to the vehicle navigation system. Examples of such traffic rules are a corresponding traffic light phase, a recommended speed, a corresponding traffic light phase, a recommended speed, etc. If the traffic rules are not applicable (e.g. recommended speed is higher that the vehicle ODD limit for the automated mode), the advice is rejected and not applied.

In the case where the manoeuvre advice is accepted by the vehicle, the updated traffic rules (such as the corresponding traffic light phase, the recommended speed, etc.) are provided as input to the vehicle motion planning modules.

The result of the analysis is provided in a MCM response (step 830). The MCM response may be an explicit response or an implicit response as described in ETSI TR 103 578. For an implicit response, the vehicle trajectory may be updated using a MCM Vehicle Manoeuvre Container (e.g., MCM Vehicle Manoeuvre Container 331 in Figure 3) or using a CAM containing the updated trajectory. For an explicit response, the MCM Vehicle Manoeuvre Container should refer to the MCM Adviceld (e.g., MCM Adviceld 650 in Figure 6) and to the ITS ID of the MCM advice originating ITS-S and provide the status of manoeuvre acceptance (accepted, rejected).

Turning back to Figure 7, a response from a vehicle ITS-S about a triggered manoeuvre is handled in step 705 upon its reception by the roadside ITS-S. An update of the analysis of the manoeuvre is then carried out in step 710 since a rejection by one of the vehicles may impact other vehicles and new MCM advice may need to be generated.

### Examples of use cases

Turning back to Figure 1, MCMs may be generated and processed to assist a vehicle turning to the left at an uncontrolled intersection.

As disclosed previously, the originating ITS station sending MCM 140 and CPM 130 is a road-side unit, RSU, that have more powerful resources to analyse situations than ITS-Ss of moving vehicles (e.g. a wider field of view, multiple fields of view, fast access to other information, knowledge of objects that populate the monitored area, etc.).

By scanning the monitored area, analytical module 111 may perceive the following objects:
- objects 161, 162, 163, and 164 respectively corresponding to the vehicles 151, 152, 153, and 154 on the road lanes, and
- object 156 corresponding to pedestrian 155 on the sidewalk.

For the sake of illustration, it is assumed that vehicle 155 is not perceived using the RSU sensors as it is outside the field of view of the cameras 120 and 121.

In the illustrated example, the vehicle 153 is assumed to be an automated vehicle willing to turn to the left at the road intersection. To that end, the ITS-S of this vehicle generates a MCM referenced 143 containing the request trajectory for the vehicle 153 in a Vehicle Manoeuvre Container (e.g., Vehicle Manoeuvre Container 331 in Figure 3).

Furthermore, the sensor data fusion module of the RSU analytical module (e.g., sensor data fusion module 230 in Figure 2) is able to fuse data perceived by the various roadside sensors with the vehicle ITS-Ss generating ITS messages that are received by the communication module of the RSU ITS-S (e.g., communication module 260 in Figure 2). For example, the MCM referenced 143 generated by the ITS-S of the vehicle 153, that is associated with the perceived object 163, is received by ITS-S 112.

It is also assumed that the vehicles 151 and 152 are connected and automated vehicles comprising an ITS-S generating MCMs 141 and 142 to indicate the target trajectory of the vehicles that drive straight on the road.

Vehicle 154 behind the vehicle 153 is this example is not a connected vehicle and thus it is not generating ITS-S messages. However using the roadside sensors and the analytical module it is perceived as the object 164.

The vehicle 155 behind the vehicle 154 generates ITS-S messages to indicate its position and speed using CAM 131.

The manoeuvre coordination controller of the RSU's analytical module (e.g., manoeuvre coordination controller 240) is able to analyse the global situation with all the perceived objects, with the analysis of the traffic motion using the trajectories provided by the connected and automated vehicles through ITS messages 141, 142, 143, and 131, and with predicted trajectories for not connected objects perceived by the roadside sensors.

In the example illustrated here, the manoeuvre coordination controller can analyse the global situation and assist vehicle 153 to turn to the left. For example, if the waiting time for the vehicle 153 is above a certain threshold and if the length of the queue of vehicles waiting behind vehicle 153 is above a certain length or certain number of vehicles, the manoeuvre coordination controller may trigger a series of SPAT advice through MCMs 140 to the connected vehicles able to receive MCMs in order to minimize the traffic jam situation.

According to some embodiments, the sequence of MCMs generated reproduces the behaviour of a traffic light at the intersection. For safety reason, the "green light" is given to the requested vehicle 153 to turn to the left after that the other vehicles 151 and 152 affected by the manoeuvre advices have confirmed their acceptance of the manoeuvre.

Therefore, the sequence of MCMs (with an abstraction level of the SPAT States, e.g., SPAT States data element 421 in Figure 4) may be like the following one:

| **time** | **MCMs** | **SPAT states / response** | |
|---|---|---|---|
| T1 | MCM advice for 151 | state: | |
| | | | - red light to drive straight |
| | | | - green light to turn right |
| | | next timing change: 30 seconds | |
| | MCM advice for 152 | state: | |
| | | | - red light to drive straight |
| | | | - red light to turn left |
| | | next timing change: 30 seconds | |
| T2 | MCM response from 151 | | - accept |
| T3 | MCM response from 152 | | - accept |
| T4 | MCM advice for 153 | state: | |
| | | | - green light to turn left |
| | | | - green light to turn right |
| | | next timing change: 20 seconds | |
| T5 | MCM advice for 151 & 152 | state: | |
| | | | - yellow blinking light |

At time T1, the RSU prepares a MCM with SPAT Advice for the vehicle 151 and a MCM with SPAT Advice for vehicle 152 to ask them to cooperate with the vehicle 153. The advice is prepared based on the road configuration. The manoeuvre coordination controller 240 asks these vehicles to stop at the intersection for the lanes that are in conflict with the requested trajectory for vehicle 153. Accordingly, it is asked to vehicle 151 not to continue straight (while it is allowed to turn right), i.e., to stop at the intersection if it does not turn right, and it is asked to vehicle 152 to stop at the intersection.

At times T2 and T3, the ITS-S of vehicle 151 and 152 generate the MCM response 141 and 142 to indicate that they accept the proposed advice.

As a consequence, at time T4, the RSU informs the ITS-S of vehicle 153 that it may safely turn left at the intersection. The next timing change value indicates a period of time during which the advice is expected to be valid. But if needed the RSU can provide an updated advice before this time. At the end of this timing period, if no new advice is provided, the default priority rules of the monitored intersections are to be applied by the automated vehicles.

Finally, at time T5, once the vehicle 153 has succeeded in turning left, the RSU may "reset" the SPAT Advice for vehicles 151 and 152 by providing a state "Yellow blinking light" meaning the vehicles may pass the intersection with caution. For the sake of traffic efficiency, the RSU may decide the time of T5 after that a certain number of vehicles following vehicle 153, such as vehicles 154 and 155, have passed the intersection.

Thanks to this MCM advice based on SPAT data element, the RSU can coordinate the traffic temporary and adapt the messages based on the received requests from vehicles and the traffic flow.

Compared to a physical traffic light, the acceptance of the MCMs by the target vehicles 151 and 152 is used as a transition to activate the green light phase.

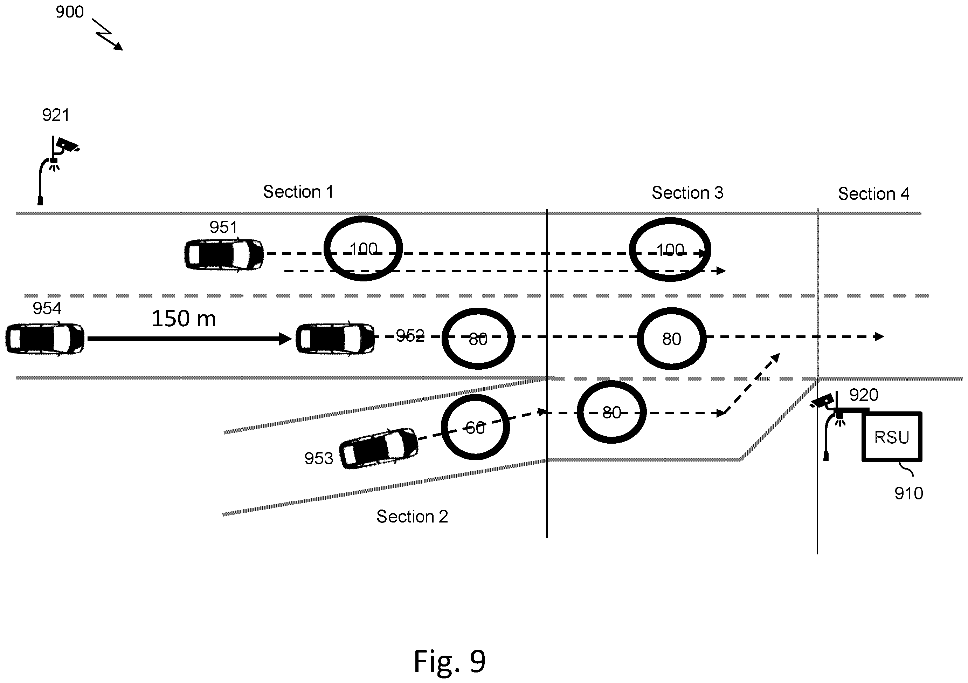

**Figure 9** illustrates an intelligent transportation system (ITS) in a situation according to which vehicles are entering a highway using an entry ramp, wherein an IVI Advice is used for managing vehicles already located in the corresponding portion of the highway and vehicles entering the highway.

According to this example, a RSU referenced 910 is used to monitor the portion of the highway on which the entry ramp is located and to coordinate the vehicles located in this portion of the highway and on the access ramp. More precisely, the manoeuvre coordination controller (e.g., manoeuvre coordination controller 240 in Figure 2) of RSU 910 is used to adapt the speed and the gap between the vehicles already located on the highway such as the vehicle 951, 952, and 954 to facilitate the safe insertion of vehicles, for example of vehicle 953 that is located on the entry ramp. To that end, the manoeuvre coordination controller analyses the trajectories of all these vehicles based on the ITS messages (CAMs or MCMs) they generate and/or using predicted trajectories from the perceived objects obtained by the analytical module of the RSU, using the roadside sensors, e.g., cameras 920 and/or 921. The manoeuvre coordination controller is able to analyse the global situation and to generate a set of IVI advice to the vehicles that are able to handle MCM advice.

According to the example illustrated in Figure 9, advices are provided by the RSU 910 through MCMs containing an IVI Advice Container (e.g., IVI Advice Container 336 in Figure 3) or an I2V Advice Container (e.g., I2V Advice Container 637 in Figure 6). To determine these advices, the RSU takes into account the actual speed of the vehicles to compute recommended target speeds for the merging manoeuvre. For the sake of illustration, it is assumed that the section 1 of the highway, the speeds of the vehicles are the following:
- vehicle 952 is driving at a speed of 80 km/h on the right lane,
- vehicle 951 is driving at a speed of 100 km/h on the left lane, and
- vehicle 954 is driving behind vehicle 952 on the right lane.

It is also assumed that vehicle 953 is driving on section 2 of the highway (corresponding to the entry ramp).

Using camera 920, RSU 910 detects that vehicle 953 is requesting a manoeuvre assistance for lane merging. Accordingly, RSU 910 generates the following advice:
- for vehicle 953 entering the highway:
   - target speed of 60 km/h while driving in section 2,
   - target speed of 80 km/h while driving in section 3 of the highway (where the entry ramp joins the highway),
- for vehicle 952 driving on the right lane of the highway:
   - target speed of 80 km/h (i.e., keep its actual speed) while driving in section 3,
- for vehicle 951 driving on the left lane of the highway:
   - target speed of 100 km/h (i.e., keep its actual speed) while driving in sections 1 and 3,
- for vehicle 954 driving on the right lane of the highway behind vehicle 952:
   - instead of providing a speed advice, a gap advice is provided to increase the gap between vehicles 952 and 954 so that vehicle 953 has more space to insert between both vehicles. For example, a gap advice of 150 meters may be provided.

It is noted that all the vehicles in this example have some Automated Driving System features that control the vehicle trajectory by computing the speed, acceleration or deceleration values based on the vehicle own perception of the situation and the advice received by the RSU. Thanks to the MCMs containing IVI advice in the form of recommended speed, recommended gap, recommended lane, etc., the autonomous vehicles can easily interpret this advice as they could do when receiving IVIMs. Thanks to this disclosure, the RSU can provide individual advice to each vehicle concerned by the manoeuvre while IVIMs are provided as generic advices applicable to all the vehicles driving in the road or on the same lane.

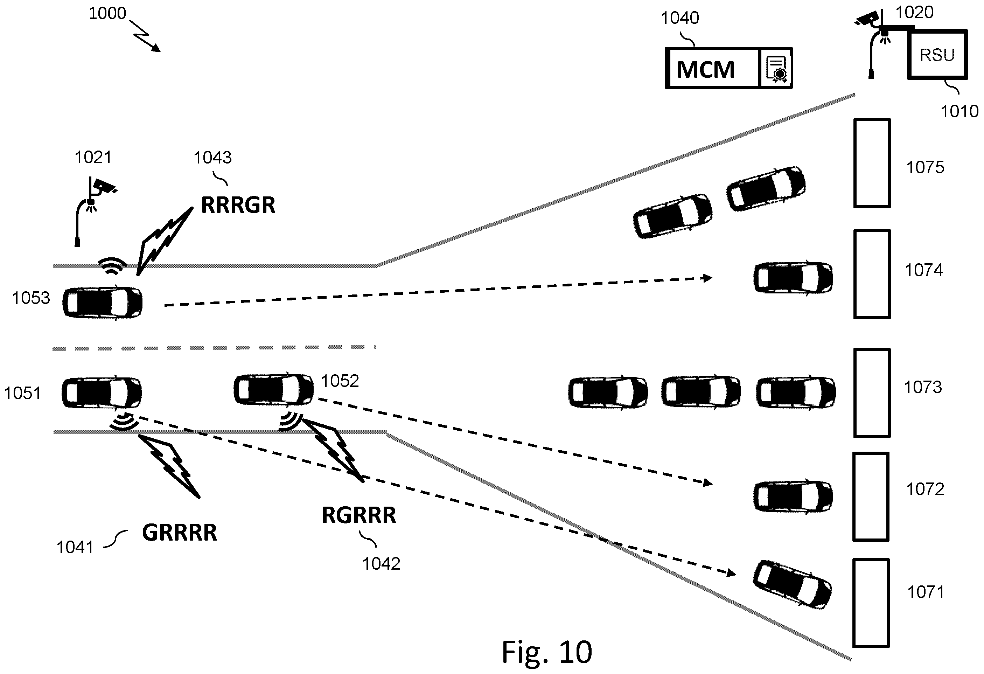

**Figure 10** illustrates an intelligent transportation system (ITS) monitoring a toll barrier, wherein SPAT Advices are used to manage vehicles arriving at the toll barrier.

For the sake of clarity and conciseness, the intelligent transportation system, referenced 1000, is the same or is similar to the one illustrated in Figure 1, with an illustration of an example of MCM SPAT Advice generated by the roadside unit 1010.

Like ITS-S 110 in Figure 1, the originating ITS station, ITS-S, sending MCM 1040 is a road-side unit, RSU, that has more powerful resources to analyse situations than ITS-Ss of moving vehicles (e.g. a wider field of view, multiple fields of view, fast access to other information, knowledge of objects that populate the monitored area, etc.).

ITS 1000 is implemented at a toll barrier and comprises a fixed road side unit 1010 and several entities that may carry or comprise an ITS station (ITS-S) each, for transmitting and/or receiving ITS messages within the ITS. The several entities may be for example, the vehicles 1051, 1052, and 1053. Likewise, fixed road side unit 1010 includes a set of sensors, such as image sensors, here video cameras 1020 and 1021, and an analytical module to analyse data provided by the sensors.

The analytical module may perceive all the vehicles approaching the toll barrier by using the image sensors 1020 and 1021 and by analysing the messages received from ITS-S of the vehicles 1051, 1052, and 1053, it being assumed that vehicles 1051, 1052, and 1053 regularly provide their position and speed using CAMs (Cooperative Awareness Message) as defined in EN 302 637-2.

In this example, RSU 1010 is selecting the SPAT advice type as the appropriate format to coordinate vehicles approaching the toll barrier.

The manoeuvre coordination controller (e.g., manoeuvre coordination controller 240 in Figure 2) of RSU 1010 is able to analyse the global situation and to provide advice to the connected and automated vehicles through ITS messages such as MCM 1040. MCM 1040 is containing a SPAT advice container according to the data structure 335 or 637 in Figure 3 or 6, respectively. In particular and according to the example of Figure 10, it contains three SPAT advice 1014, 1042 and 1043:
- SPAT advice 1041 targets vehicle 1051 and indicates that the toll barrier 1071 is the one to be used by vehicle 1051. This indication is done through the message "GRRRR", where the first lane from the right in the SPAT state is set to "Green" ("G") virtual traffic light phase and the other lanes are set to a SPAT state as a "Red" ("R") virtual traffic light phase,
- SPAT advice1042 targets vehicle 1052 and indicates that the toll barrier 1072 is the one to be used by vehicle 1052. This indication is done by setting the second lane from the right in the SPAT state to the Green ("G") phase and other lanes to the Red ("R") phase, and
- SPAT advice 1043 targets vehicle 1053 and indicates that the toll barrier 1074 is the one to be used by vehicle 1053. This indication is done by setting the fourth lane from the right in the SPAT state as a Green ("G") phase and the other lanes as a Red ("R") phase.

Thanks to this ITS message, the RSU may handle the traffic flow in an efficient way by avoiding too many vehicles in the same queue waiting in front of the toll barrier. The choice of the toll barrier location may be done based on the number of waiting vehicles at each toll barrier and also the allocation per vehicle is done based on the initial lane used by the vehicles to avoid vehicles crossing each other when approaching to the toll barrier.

Compared to a MCM providing a set of trajectories using a manoeuvre container like manoeuvre container 333 in Figure 3, SPAT advices 1041, 1042 and 1043 are easy to compute by the RSU and easy to analyse by each vehicle automated driving system since these systems are already able to compute such advice from SPAT generated from actual traffic light controller.

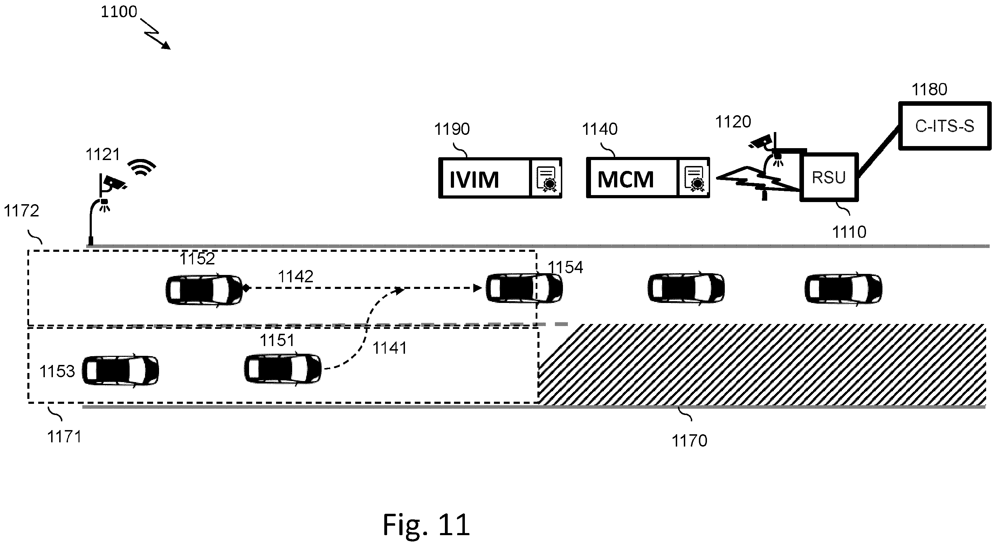

**Figure 11** illustrates an intelligent transportation system (ITS) monitoring a Road Work Zone (RWZ) on a highway, wherein IVIM Advices are used to manage vehicles arriving at the RWZ.

Again, for the sake of clarity and conciseness, the intelligent transportation systems, referenced 1100, is the same or is similar to the one illustrated in Figure 1, with an illustration of an example of MCM IVI Advice generated by the roadside unit 1110.

Like ITS-S 110 in Figure 1, the originating ITS station, ITS-S, sending MCM 1040 is a road-side unit, RSU, that has more powerful resources to analyse situations than ITS-Ss of moving vehicles (e.g. a wider field of view, multiple fields of view, fast access to other information, knowledge of objects that populate the monitored area, etc.). In particular, the RSU may access to information describing the road work zone such as road work zone 1170 illustrated in Figure 10. The RWZ information can be obtained from road operators through a central ITS station (C-ITS-S) for example C-ITS-S 1180.

According to the illustrated example, the road comprises two lanes going to the same direction such as on a highway and RWZ 1170 is blocking the most right part of the lower lane.

To inform users about the work in progress, the road operator may provide information such as an updated speed limit and the position of the blocked lane. Such item of information may be shared with connected vehicles through the IVIM referenced 1190, transmitted by RSU 1110.

Since the IVIM does not contain any instruction regarding the merge of the two lanes into a single lane, the RSU may generate and transmit a MCM with an individual IVI advice, for example using the data structure 336 or 637 in Figure 3 or 6, respectively, to better coordinate the behaviour of vehicles located on these portions of lanes and avoid (or reduce) traffic congestion.

As illustrated, vehicle 1152 is already located on upper left lane that is not blocked by the RWZ and vehicle 1151 is still located on the lower lane and is ahead of other vehicles located on the same lane. The RSU may analyse this situation using data obtained from cameras 1120 and 1121 and/or from CAMs generated by vehicles 1151 and 1152. As a result of this analysis, RSU 1110 may generate and send MCM 1140 in addition to IVIM 1190 in order to give additional instructions to vehicles 1151 and 1152. Such additional instructions may be the following:

| **IVI Advice Container** | | | | |
|---|---|---|---|---|
| road description | traffic rule 1141 | | traffic rule 1142 | |
| linkedlVIMs:1190 | executantld: 1151 | | executantld: 1152 | |
| | zoneld: 1171 | | zoneld: 1172 | |
| | recommended Lane: | | minGapBetweenVehicles: | |
| | | *<lane id as in IVIM 1190>* | | *<computed value to insert a new vehicle*> |

According to this IVI Advice container, the road description is provided using a reference to IVIM 1190 and the IVI advice consists in two traffic rules for vehicles 1151 and 1152 concerned by the lane merging.

The first traffic rule, referenced 1142, targets vehicle 1152 and aims at increasing the gap between vehicle 1152 and vehicle 1154 that is ahead of it on the same lane. To that end, RSU 1110 computes a minimum gap value between vehicles 1152 and 1154 based on their respective speed so as to allow a safe insertion of vehicle 1151.

The second traffic rule, referenced 1141, targets vehicle 1151 to advice it to change from the lower lane to upper lane, once the conditions for the autonomous vehicle to change lane are fulfil (meaning in particular enough space to insert in the traffic flow). Thanks to traffic rule 1142 to increase the gap with the previous vehicle, the merging process has more probability to success as the autonomous vehicle 1151 will detect there is enough space to insert in the traffic flow of the upper lane. Thanks to the MCM with I2V Advices, it is possible to complement the traffic rules defined in the IVIMs that are applicable to all vehicles in a more individual way at the point of merging just before the road work zone.

### Example of a hardware to carry out steps of the method of embodiments of the present disclosure

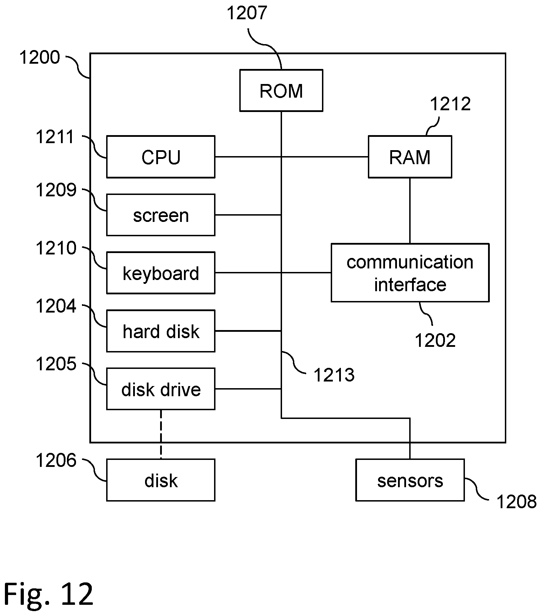

**Figure 12** is a schematic representation of an example of a communication ITS-S device configured to implement some embodiments of the present disclosure. It may be either an ITS-S embedded in a vehicle or in a road side entity.

The communication device 1200 may preferably be a device such as a microcomputer, a workstation or a light portable device. The communication device 1200 comprises a communication bus 1213 to which there are preferably connected:
- a central processing unit 1211, such as a microprocessor, denoted CPU or a GPU (for graphical processing unit);
- a read-only memory 1207, denoted ROM, for storing computer programs for implementing some embodiments of the disclosure;
- a random access memory 1212, denoted RAM, for storing the executable code of methods according to embodiments of the disclosure as well as the registers adapted to record variables and parameters necessary for implementing methods according to embodiments of the disclosure; and
- at least one communication interface 1202 connected to the radio communication network over which ITS messages are transmitted. The ITS messages are written from a FIFO sending memory in RAM 1212 to the network interface for transmission or are read from the network interface for reception and writing into a FIFO receiving memory in RAM 1212 under the control of a software application running in the CPU 1211.

Optionally, the communication device 1200 may also include the following components:
- a data storage means 1204 such as a hard disk, for storing computer programs for implementing methods according to one or more embodiments of the disclosure;
- a disk drive 1205 for a disk 1206, the disk drive being adapted to read data from the disk 1206 or to write data onto said disk;
- a screen 1209 for serving as a graphical interface with the user, by means of a keyboard 1210 or any other pointing means.

The communication device 1200 may be optionally connected to various peripherals including perception sensors 1208, such as for example a digital camera, each being connected to an input/output card (not shown) so as to supply data to the communication device 1200.

Preferably the communication bus provides communication and interoperability between the various elements included in the communication device 1200 or connected to it. The representation of the bus is not limiting and in particular the central processing unit is operable to communicate instructions to any element of the communication device 1200 directly or by means of another element of the communication device 1200.

The disk 1206 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the disclosure to be implemented.

The executable code may optionally be stored either in read-only memory 1207, on the hard disk 1204 or on a removable digital medium such as for example a disk 1206 as described previously. According to an optional variant, the executable code of the programs can be received by means of the communication network, via the interface 1202, in order to be stored in one of the storage means of the communication device 1200, such as the hard disk 1204, before being executed.

The central processing unit 1211 is preferably adapted to control and direct the execution of the instructions or portions of software code of the program or programs according to the disclosure, which instructions are stored in one of the aforementioned storage means. On powering up, the program or programs that are stored in a nonvolatile memory, for example on the hard disk 1204 or in the read-only memory 1207, are transferred into the random access memory 1212, which then contains the executable code of the program or programs, as well as registers for storing the variables and parameters necessary for implementing the disclosure.

In a preferred embodiment, the apparatus is a programmable apparatus which uses software to implement the disclosure. However, alternatively, the present disclosure may be implemented in hardware (for example, in the form of an Application Specific Integrated Circuit or ASIC).

Although the present disclosure has been described herein above with reference to specific embodiments, the present disclosure is not limited to the specific embodiments, and modifications will be apparent to a skilled person in the art which lie within the scope of the present disclosure.

Many further modifications and variations will suggest themselves to those versed in the art upon referring to the foregoing illustrative embodiments, which are given by way of example only and which are not intended to limit the scope of the disclosure, that being determined solely by the appended claims. In particular, the different features from different embodiments may be interchanged, where appropriate.

Each of the embodiments of the disclosure described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method, in an Intelligent Transport System, ITS, of improving manoeuvre coordination, the method comprising, in a coordinating ITS station, ITS-S:
identifying a manoeuvre to be carried out, the manoeuvre involving a plurality of entities,
at least one of the entities comprising a coordinated ITS-S,
obtaining at least one traffic rule to be followed by the at least one entity to carry out the manoeuvre, and
generating and transmitting a Manoeuvre Coordination Message, MCM, comprising a first description structure for describing the at least one obtained traffic rule and a second description structure for describing an environment wherein the manoeuvre is to be carried out, the second description structure being different from the first description structure.

2. The method of claim 1, wherein the first description structure comprises an identifier of the at least one entity.

3. The method of claim 1 or claim 2, wherein the second description structure comprises a description of the environment wherein the manoeuvre is to be carried out or comprises a reference to an ITS message describing the environment wherein the manoeuvre is to be carried out.

4. The method of claim 3, wherein the first description structure comprises a reference to a zone of an environment described in the second description structure, wherein the manoeuvre is to be carried out in the zone referenced.

5. The method of any one of claims 1 to 4, wherein the first description structure comprises an indication of a time period during which the manoeuvre may be carried out.

6. The method of any one of claims 1 to 5, wherein the at least one obtained traffic rule comprises a minimum or a maximum speed limit, a minimum or a recommended gap between the at least one entity comprising the coordinated ITS-S and another entity, a recommended lane, and/or a road sign code.

7. The method of any one of claims 1 to 6, further comprising monitoring an area and identifying the manoeuvre.

8. The method of any one of claims 1 to 7, further comprising receiving, from the at least one entity comprising the coordinated ITS-S, an indication of an intention to carry out the manoeuvre.

9. The method of any one of claims 1 to 8, wherein at least one of the first and the second description structures is complying with the In Vehicle Information, IVI, format, the Signal and Phase Timing, SPAT, format, or the infrastructure-to-vehicle, I2V, format.

10. The method of any one of claims 1 to 9, wherein the MCM generated is addressed to a set of several entities of the plurality of entities, the at least one traffic rule being at least one traffic rule to be followed by each entity of the set of several entities.

11. The method of any one of claims 1 to 10, wherein the generated and transmitted MCM is referred to as the first MCM, the method further comprising generating and transmitting, by the coordinating ITS-S, a second MCM including one first description structure for describing at least one updated traffic rule to be carried out within the environment described in the second description structure contained in the first MCM .

12. A method, in an Intelligent Transport System, ITS, of improving manoeuvre coordination, the method comprising, in a coordinated ITS station, ITS-S:
receiving a Manoeuvre Coordination Message, MCM, comprising a first description structure for describing at least one traffic rule and a second description structure for describing an environment wherein a manoeuvre is to be carried out, the second description structure being different from the first description structure, the at least one traffic rule being to be followed by an entity comprising the coordinated ITS-S to carry out the manoeuvre, the manoeuvre involving the entity comprising the coordinated ITS-S and another entity.

13. The method of claim 12, wherein at least one of the first and the second description structures is complying with the In Vehicle Information, IVI, format, the Signal and Phase Timing, SPAT, format, or the infrastructure-to-vehicle, I2V, format.

14. A computer program product for a programmable apparatus, the computer program product comprising a sequence of instructions for implementing each of the steps of the method according to any one of claims 1 to 13 when loaded into and executed by the programmable apparatus.

15. A device for an Intelligent Transport System, ITS, station, the device comprising a processing unit configured for carrying out each of the steps of the method according to any one of claims 1 to 13.
